**Europäisches Patentamt**

**European Patent Office**

**Office européen des brevets**

(19)

(11) Veröffentlichungsnummer: **0 080 057**
A1

(12) # EUROPÄISCHE PATENTANMELDUNG

(21) Anmeldenummer: **82109465.3**

(22) Anmeldetag: **13.10.82**

(51) Int. Cl.³: **B 61 C 9/00, F 16 D 1/08**

(30) Priorität: **19.11.81 DE 8133638 U**

(43) Veröffentlichungstag der Anmeldung: **01.06.83**
**Patentblatt 83/22**

(84) Benannte Vertragsstaaten: **AT BE CH DE FR GB IT LI NL SE**

(71) Anmeider: **Thyssen Industrie AG, Am Thyssenhaus 1, D-4300 Essen (DE)**

(72) Erfinder: **Bödeker, Hermann, Flurstrasse 8, D-4330 Mülheim (DE)**
Erfinder: **Piepenbreier, Ernst, Wintgenstrasse 15, D-4300 Essen (DE)**
Erfinder: **Trost, Josef, Altstrasse 25, D-4300 Essen (DE)**

(74) Vertreter: **Eberhard, Friedrich, Dr., Am Thyssenhaus 1, D-4300 Essen (DE)**

(54) **Laufachse eines Schienenfahrzeuges.**

(57) Diese Laufachse (1) besteht aus dem eigentlichen starren Verbindungsstück zwischen zwei einander gegenüberliegenden Laufrädern (2) und einem Zahnrad (4), das kraftschlüssig auf der Laufachse (1) sitzt und als Abtriebsrad des Fahrzeugantriebs (6) dient. Um Verwindungen des Radkörpers (7) durch einen Preßsitz und dadurch aufwendige Nacharbeit zu vermeiden, sitzt die Radnabe (8) zunächst mit einem leichten Schiebesitz auf der Laufachse (1).

Die Radnabe (8) fällt zu ihren beiden Stirnseiten hin konisch ab. Auf diesen konischen Flächen sitzt je ein Schrumpfring (11), die gegeneinander mittels Durchgangsschrauben (12) verspannt sind. Dadurch wird der Schiebesitz der Nabe (8) zu dem erforderlichen Preßsitz gesteigert. Die Maßänderungen der Nabe (8) und der Laufachse (1) sind dabei derart minimal, dass eine Verwindung des Zahnrades (4) nicht eintritt.

EP 0 080 057 A1

ACTORUM AG

0080057

Essen, den 16.11.1981
PZ 3283    Va/gl

Thyssen Industrie AG
Am Thyssenhaus 1
4300 Essen 1

Laufachse eines Schienenfahrzeuges

Die Erfindung betrifft die Laufachse eines Schienenfahrzeuges, die die Abtriebswelle des Fahrzeugantriebs bildet und mit mindestens einem drehmomentübertragenden Glied des letzteres über eine Nabe kraftschlüssig verbunden ist.

Bei Achsgetrieben dieser Bauart wird das auf der Laufachse sitzende Antriebsrad gewöhnlich bei Wellenübermaß auf die Achse gepreßt. Hierzu ist eine Spezialmaschine erforderlich, weshalb dieses Aufpressen auch meist vom Achshersteller durchgeführt wird.

Der Getriebehersteller liefert hierzu das Achszahnrad an, das auch einen gesonderten Zahnkranz erhalten kann. Durch das erforderliche Wellenübermaß verwindet sich der Radkörper beim Aufpressen, so daß - bei einteiliger Ausführung - die Zahnflanken oder - bei Rädern mit einem Zahnkranz - die Auflagefläche des Radkörpers zwischen diesem und dem Kranz mit großem Aufwand geschliffen werden muß. Dabei ist die lange Laufachse für den Schleifvorgang hinderlich und das notwendige Ausrichten der Achse auf der Schleifmaschine teuer. Auch eventuelle Reparaturen müssen in der dargestellten Weise vorgenommen werden.

Der Erfindung liegt die Aufgabe zugrunde, diese aufwendige Arbeiten, Transporte und Maschinenabhängigkeiten zu umgehen.

- 2 -

0080057

Die Erfindung besteht darin, daß die Nabe mit ringförmigen und mit der Laufachse gleichmittigen Elementen in Verbindung steht, die in Richtung auf eine Verkleinerung der Nabenbohrung mittels Schrauben nachstellbar sind. Damit kann jeder qualifizierter Schlosser die Befestigung des Zahnradkörpers auf der Laufachse vornehmen. Benötigt wird nur ein Drehmomentschlüssel bekannter Bauart. Das Lösen eines Rades ist ebenfalls ohne Schwierigkeiten durchführbar.

Vorteilhaft dienen als ringförmige Elemente je ein auf konischen Bereichen der Nabe eines Zahnrades sitzender Spannring, die gegeneinander verspannbar sind. Hierfür können handelsübliche Spann- oder Schrumpfelemente verwendet werden, die durch Anziehen der Durchgangsschrauben mit vorgeschriebenem Drehmoment ein sehr genau bestimmbares Klemmen der Radnaben auf der Achse erzeugen. Das Rutschmoment kann ohne weiteres mit vier- bis fünffacher Sicherheit übertragen werden.

Zweckmäßig bilden die ringförmigen Elemente und die Nabe ein gemeinsames Stück. Dabei sind die ersteren quer zur Ringebene mit einer Trennung versehen und an der Trennstelle in Umfangsrichtung nachstellbar. Es ist vorstellbar, daß die Elemente zumindest einen seitlichen Teil der Nabe eines Zahnrades bilden. Sie können aber auch doppelt, an beiden seitlichen Bereichen der Nabe symmetrisch zueinander ausgebildet sein. Bei diesen Ausführungen entfallen die Spannringe, da die Nabe in den betreffenden Bereichen selbst als Spannring funktioniert.

Um die Durchgangsschrauben für die Nachstellung einer entsprechend geschlitzten Nabe günstig unterbringen zu können, weist vorteilhaft die Nabe an der Trennstelle zumindest eine Ausnehmung für den Kopf der Schraube auf, die die Trennungsschlitze dann überbrückt, oder ist sie an der Trennstelle mit zwei einander gegenüberliegenden Pratzen versehen.

Im folgenden wird die Erfindung anhand von in der Zeichnung schematisch dargestellten Ausführungsbeispielen näher erläutert.

Es zeigen

Fig. 1 die Laufachse eines Schienenfahrzeuges mit einem angetriebenen Großzahnrad im Schnitt,

Fig. 2 eine Ansicht auf die Nabe des Großzahnrades senkrecht zur Laufachse und

Fig. 3 eine andere Ausführungsform der Nabe des Großzahnrades in Ansicht.

An einer Laufachse 1 eines Schienenfahrzeuges sind an den Enden je ein Laufrad 2 und dazwischen eine Bremsscheibe 3 sowie ein Zahnrad 4 befestigt, das als drehmomentübertragendes Glied zusammen mit einem Ritzel 5 die letzte Stufe des Fahrzeugantriebs 6 bildet. Das Zahnrad 4 besteht aus einem Radkörper 7 mit einer Nabe 8 und einem zweiteiligen Zahnkranz 9, der pfeilverzahnt und auf dem Radkörper 7 durch Schrauben 10 befestigt ist.

Auf der Nabe 8, die zu ihren beiden Stirnseiten hin nach außen abfallend konisch ausgebildet ist, sitzen links und rechts von dem Radkörper 7 mit entsprechender Konizität versehene ringförmige Elemente, im vorliegenden Fall Spann- oder auch Schrumpfringe 11, die gegeneinander mittels Durchgangsschrauben 12 verspannt sind. Infolge der Wirkung der miteinander arbeitenden konischen Flächen wird die Nabenbohrung verkleinert, so daß die Passung zwischen der Nabenbohrung und der Laufachse 1, die ursprünglich entsprechend einem leichten Schiebesitz nach der internationalen Norm ISO mit F6/m6 toleriert wurden, zu einem Preßsitz gesteigert wird. Damit sitzt das Zahnrad 4 genauso fest auf der Laufachse 1 wie bei den bisher bekannten Ausführungen. Die Verwendung der Spannringe 11 gestattet aber eine leichtere Durchführung der Arbeiten und vermeidet die Nacharbeit an den Zahnflanken oder an dem Radkörper 7, weil dieser sich nicht mehr verzieht.

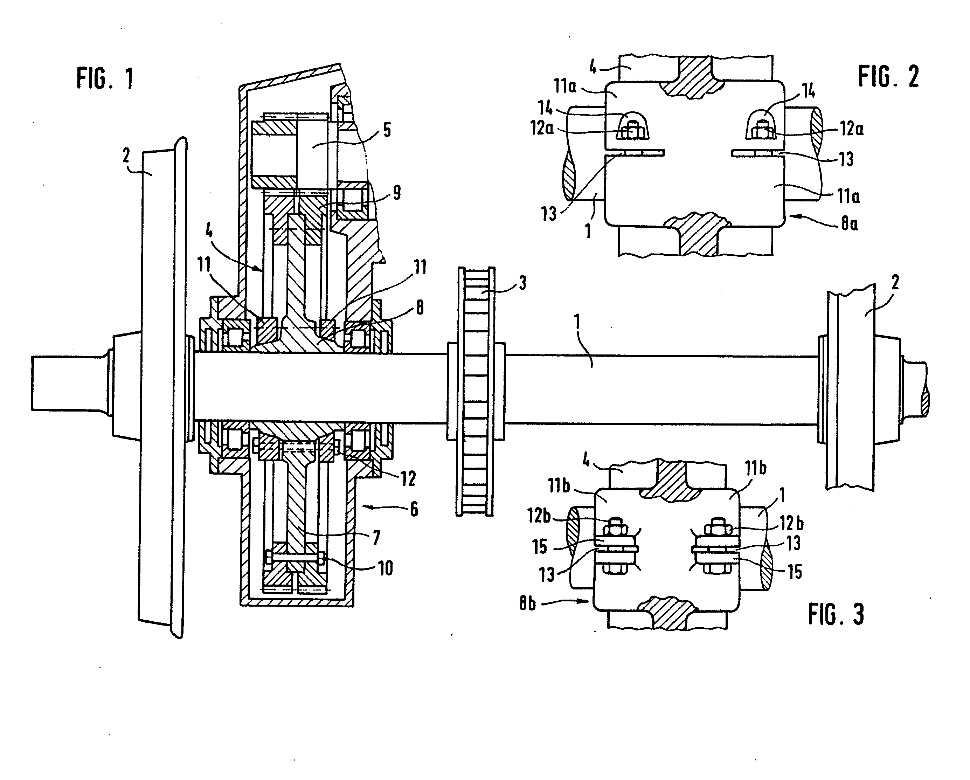

Dieselben Effekte werden auch mit den Ausführungen nach Fig. 2 und 3 erzielt. Hier bilden die seitlichen Bereiche der Nabe 8a bzw. 8b die ringförmigen Elemente 11a bzw. 11b. Diese sind also mit den zugehörigen Naben vereint und treten als Bauteil selbständig nicht hervor.

Sie weisen in der zu der Zeichnungsebene senkrechten Durchmesserebene zumindest eine Trennung 13 auf, die als Schlitze nur zu den Stirnseiten der Nabe 8a bzw. 8b offen sind. Wenn Stiftschrauben 12a für die Verkleinerung der Nabenbohrung dienen, dann sind Ausnehmungen 14 in den ringförmigen Elementen 11a für die Aufnahme der Schraubenmuttern vorgesehen. Es können auch Kopfschrauben 12b zur Anwendung kommen, wenn im Bereich der Trennung 13 einander gegenüberliegende Pratzen 15 an den ringförmigen Elementen 11b ausgebildet sind.

Ansprüche:

1. Laufachse eines Schienenfahrzeuges, die die Abtriebswelle des Fahrzeugantriebs bildet und mit mindestens einem drehmomentübertragenden Glied des letzteren über eine Nabe kraftschlüssig verbunden ist, dadurch gekennzeichnet, daß die Nabe (8;8a;8b) mit ringförmigen und mit der Laufachse (1) gleichmittigen Elementen (11;11a;11b) in Verbindung steht, die in Richtung auf eine Verkleinerung der Nabenbohrung mittels Schrauben (12;12a;12b) nachstellbar sind.

2. Laufachse nach Anspruch 1, dadurch gekennzeichnet, daß als ringförmige Elemente je ein auf konischen Bereichen der Nabe (8) eines Zahnrades (4) sitzender Spannring (11) dienen, die gegeneinander verspannbar sind.

3. Laufachse nach Anspruch 1, dadurch gekennzeichnet, daß die ringförmigen Elemente (11a;11b) und die Nabe (8a;8b) ein gemeinsames Stück bilden, die ersteren quer zur Ringebene mit einer Trennung (13) versehen und an der Trennstelle in Umfangsrichtung nachstellbar sind.

4. Laufachse nach Anspruch 3, dadurch gekennzeichnet, daß die ringförmigen Elemente (11a;11b) zumindest einen seitlichen Teil der Nabe (8a;8b) eines Zahnrades (4) bilden.

5. Laufachse nach Anspruch 4, dadurch gekennzeichnet, daß beide seitlichen Bereiche der Nabe (8a;8b) symmetrisch zueinander ausgebildet sind.

6. Laufachse nach einem der Ansprüche 3 bis 5, dadurch gekennzeichnet, daß die Nabe (8a) an der Trennstelle zumindest eine Ausnehmung (14) für den Kopf der die Trennung (13) überbrückenden Schraube (12a) aufweist.

7. Laufachse nach einem der Ansprüche 3 bis 5, dadurch gekennzeichnet, daß die Nabe (8b) an der Trennstelle zwei einander gegenüberliegende Pratzen (15) für die die Trennung (13) überbrückende Schraube (12b) aufweist.

0080057

FIG. 1 FIG. 2 FIG. 3

Europäisches
Patentamt

**EUROPÄISCHER RECHERCHENBERICHT**

0080057

Nummer der Anmeldung

EP 82 10 9465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 61 C 9/00 |
| Y | GB-A-1 429 186 (BRUSH ELECTRICAL MACHINES) * Seite 2, Zeilen 23-30; Figur 2 * | 1-7 | F 16 D 1/08 |
| | --- | | |
| Y | GB-A- 305 281 (STONE & CO.) * Seite 3, Zeilen 12-16, 32-64; Seite 4, Zeilen 51-111; Seite 5, Zeilen 58-73; Figuren 1,2,8 * | 1-7 | |
| | --- | | |
| A | FR-A-2 343 924 (SCHÄFER et al.) | | |
| | --- | | |
| A | ANTRIEBSTECHNIK, Band 19, Nr.9, September 1980, MAINZ (DE) H.M. THIELE: "Spannsätze und Spannelemente als Welle Nabe-Verbindungen in Werkzeugmaschinen", Seiten 417,418 | | RECHERCHIERTE SACHGEBIETE (Int. Cl. ³) B 61 C B 61 F F 16 D |
| | ----- | | |

Der vorliegende Recherchenbericht wurde für alle Patentansprüche erstellt.

| Recherchenort DEN HAAG | Abschlußdatum der Recherche 07-02-1983 | Prüfer GROTZINGER J.P. |
|---|---|---|